(19) Europäisches Patentamt
European Patent Office
Office européen des brevets

(11) EP 0 724 747 B1

(12) **FASCICULE DE BREVET EUROPEEN**

(45) Date de publication et mention de la délivrance du brevet:
**06.05.1998 Bulletin 1998/19**

(21) Numéro de dépôt: **94931086.6**

(22) Date de dépôt: **20.10.1994**

(51) Int Cl.[6]: **G02F 1/35**, C08G 73/16, C08G 63/685

(86) Numéro de dépôt international:
**PCT/FR94/01219**

(87) Numéro de publication internationale:
**WO 95/11476 (27.04.1995 Gazette 1995/18)**

(54) **POLYESTERIMIDES UTILISABLES EN OPTIQUE LINEAIRE ET/OU EN OPTIQUE NON LINEAIRE ET L'UN DE LEURS PROCEDES DE PREPARATION**

POLYESTERIMIDE VERWENDBAR IN LINEARER UND/ODER NICHTLINEARER OPTIK UND VERFAHREN ZU DEREN HERSTELLUNG

POLYESTERIMIDES FOR USE IN LINEAR AND/OR NON-LINEAR OPTICS, AND ONE METHOD FOR PREPARING SAME

(84) Etats contractants désignés:
**AT BE CH DE DK ES FR GB GR IE IT LI LU MC NL PT SE**

(30) Priorité: **21.10.1993 FR 9312783**

(43) Date de publication de la demande:
**07.08.1996 Bulletin 1996/32**

(73) Titulaire: **FLAMEL TECHNOLOGIES**
**F-69693 Venissieux Cédex (FR)**

(72) Inventeurs:
- **CHAN, You-Ping**
  **F-69008 Lyon (FR)**
- **TAPOLSKY, Gilles**
  **F-69230 Saint-Genis-Laval (FR)**
- **MEYRUEIX, Rémi**
  **F-69009 Lyon (FR)**
- **LECOMTE, Jean-Pierre**
  **F-69007 Lyon (FR)**
- **DICKENS, Michael**
  **F-69230 Saint-Genis-Laval (FR)**

(74) Mandataire: **Fleurance, Raphael**
**Cabinet Beau de Loménie,**
**51, Avenue Jean Jaurès,**
**B.P. 7073**
**69301 Lyon Cédex 07 (FR)**

(56) Documents cités:
**EP-A- 0 446 717** **EP-A- 0 452 604**
**WO-A-91/03001** **WO-A-91/13116**
**FR-A- 2 269 556** **FR-A- 2 657 083**

- **MACROMOLECULES, vol.25, 1992 pages 6714 - 6715 C. XU ET AL. 'novel double-end cross-linkable chromophores for second-order nonlinear optical materials' cité dans la demande**
- **APPLIED PHYS. LETT., vol.64, no.17, 25 Avril 1994 pages 2197 - 2199 W.SOTOYAMA ET AL. 'electro-optic side-chain polyimide system with large optical nonlinearity and high thermal stability'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 724 747 B1

## Description

### DOMAINE TECHNIQUE :

La présente invention concerne des matériaux organiques pour application en optique et/ou en optique non linéaire (OL, ONL). Plus précisément, elle concerne des polymères et copolymères contenant des fonctions esters et imides et comprenant des molécules (chromophores) capables de générer des effets non linéaires en optique, ainsi que leurs procédés de fabrication.

Les polymères concernés par l'invention sont du type de ceux aptes à être mis sous forme de films ou de guides pour réaliser des dispositifs optiques.

### ART ANTERIEUR :

Dans les applications optiques et optoélectroniques de tels matériaux polymères, on exploite le fait que ces macromolécules se comportent comme des matériaux transparents et/ou comme des matériaux optiquement non linéaires.

A l'échelle macroscopique, le comportement optiquement linéaire ou optiquement non linéaire de ces matériaux est déterminé par les susceptibilités. Celles-ci sont directement reliées à la polarisation du matériau induite par un champ électromagnétique E et régie par la relation fondamentale suivante :

$$P = P_0 + \chi^1 E + \chi^2 EE + \chi^3 EEE + ...$$

dans laquelle :

- $P$ et $P_0$ : représentent la polarisation, respectivement, en présente et en absence de champ électromagnétique,
- $E$ : représente le champ électromagnétique,
- $\chi^1$ : représente la susceptibilité linéaire,
- $\chi^2$ et $\chi^3$ : représentent les susceptibilités non linéaires du matériau.

Le coefficient $\chi^1$ reflète le comportement optique linéaire du matériau.

Les filtres, les polariseurs, les guides d'ondes sont des exemples de composants utilisant des polymères pour leur comportement optique linéaire.

Les coefficients $\chi^2$ et $\chi^3$ reflètent, respectivement, l'activité en optique non linéaire d'un matériau non linéaire de deuxième et troisième ordre.

Les matériaux actifs en optique non linéaire sont, généralement, mis en oeuvre dans des composants actifs de type modulateur, coupleur directionnel, bistable optique, film photoconducteur, etc. L'activité en optique non linéaire de ces matériaux polymères trouve son origine dans les composés hyperpolarisables (ou chromophores) qu'ils contiennent.

Par chromophore, il faut comprendre tout motif structurel dont l'interaction avec le champ électromagnétique de la lumière génère l'effet optique recherché. Cet effet peut avoir lieu à des longueurs d'onde résonnantes ou non résonantes. L'activité en optique non linéaire de ces chromophores est donnée par leur hyperpolarisabilité. Cette dernière est directement reliée au moment dipolaire moléculaire par la relation fondamentale suivante :

$$\mu = \mu_0 + \alpha F + \beta FF + \gamma FFF + ...$$

dans laquelle :

- $\mu$ et $\mu_0$ : représentent les moments dipolaires, respectivement en présence et en absence de champ électromagnétique,
- $F$ : représente le champ électromagnétique local,
- $\alpha$, $\beta$ et $\gamma$ : représentent les coefficients de polarisabilité et d'hyperpolarisabilité.

Le coefficient $\alpha$ est le coefficient de polarisabilité de la molécule chromophore et reflète son activité en optique linéaire.

Les coefficients $\beta$ et $\gamma$ représentent les coefficients d'hyperpolarisabilité, respectivement du premier et deuxième ordre.

Afin de mieux comprendre les spécifications imposées aux polymères optiques non linéaires (ONL), il convient de rappeler que les guides d'onde linéaires sont constitués de plusieurs couches de polymères déposées successivement les unes sur les autres sur un substrat, par exemple par la technique connue de "spin coating".
La couche centrale, d'indice le plus élevé, constitue le matériau guidant. Le confinement latéral de la lumière dans cette couche centrale est réalisé en y traçant un guide par des techniques connues de l'homme de l'art comme, par exemple, le moulage, l'érosion ionique ou le photoblanchiment. Cette dernière technique, qui exige que la couche centrale guidante ait un indice de réfraction modulable par irradiation lumineuse, est préférée de l'homme de l'art.
Tout cela suppose que les polymères employés aient une absorption et des indices ajustables (de préférence par photoblanchiment) et stables dans le temps à la température d'utilisation et du procédé.

Pour de plus amples détails et explications sur l'utilisation des polymères pour la fabrication de guides d'ondes optiques et optoélectroniques, on consultera l'ouvrage "Polymers for Lightwave and Integrated Optics", L. A. HORNAK, M. DECKKER ED., N. Y. (1992), ou encore l'article de C. C. TENG, Appl. Phys. Lett., 60 (13), 1538, (1992).

Par ailleurs, on sait que pour être actifs en ONL, ce qui équivaut à présenter une susceptibilité non linéaire du premier ordre non nulle, voire élevée, et donc pouvoir être utilisés dans des composants optolectroniques du type modulateur électro-optique, les chromophores hyperpolarisables doivent être orientés non centrosymétriquement dans la matrice.

Cela est généralement réalisé par polarisation du film sous un champ électrique élevé, à une température voisine de la température de transition vitreuse (Tg). L'orientation ainsi induite est ensuite figée par refroidissement sous champ.

Le film orienté obtenu est hors d'état d'équilibre et tend à se désorienter, ce qui limite la durée de vie du composant optoélectronique.

Comme le film peut s'échauffer lors de son stockage ou au cours des étapes de soudure ou de dépôt des couches métalliques, la stabilité thermique de l'orientation des chromophores et une caractéristique cruciale du polymère.

Pour plus de détails sur ces questions théroriques, on se référera à l'ouvrage de D. S. CHEMLA et J. ZYSS : "Non linear optical properties of organic molecules and crystals", Academic Press, 1987, ou à l'ouvrage de L. A. HORNAK précité.

Il s'ensuit que les polymères doivent satisfaire à plusieurs spécifications (cahier des charges), afin d'être utilisables dans des applications en optoélectronique :

**1 -** Les polymères doivent posséder les propriétés fonctionnelles suivantes :

- une absorption et des indices de réfraction parfaitement contrôlés et ajustables, de préférence par photoblanchiment UV (guides d'ondes),
- des susceptibilités non linéaires de premier et second ordre importantes,
- une atténuation optique très faible dans la fenêtre comprise entre la longueur d'absorption maximale du (ou des) chromophore(s) ($\lambda$ max) + 150 nm et 2000 nm (transparence).

**2 -** Ces propriétés fonctionnelles doivent être constantes dans le temps et stables vis-à-vis de la température, afin d'assurer une durée de vie suffisante au matériau. Un polymère optiquement non linéaire doit, avantageusement, présenter, entre autres, une bonne stabilité d'orientation des dipôles aux températures élevées, ce qui, en d'autres termes, signifie posséder une Tg élevée.

**3 -** Les polymères doivent présenter des propriétés de mise en oeuvre permettant de fabriquer aisément les composants optoélectroniques par des procédés standards connus de l'homme de l'art. Ces propriétés de mise en oeuvre sont, notamment, une solubilité suffisante permettant le dépôt sur un substrat par des techniques de "dipping" ou "spin-coating". Dans certains cas, il est aussi préférable d'avoir un polymère insoluble ou insolubilisable après dépôt, afin de permettre la fabrication de multicouches.

La stabilité d'orientation des dipôles évoquée à la spécification n° 2 ci-dessus, est un paramètre crucial pour les polymères considérés, au regard de l'application optique non linéaire.
En effet, étant donné que l'orientation sous champ électrique élevé s'opère à une température supérieure ou égale à la température de transition vitreuse Tg du polymère, il est clair que ce dernier sera d'autant moins sujet au phénomène de relaxation-désorientation des dipôles que sa Tg sera haute.

Cela limite donc le choix des matrices polymères aux matériaux thermochimiquement stables, à des températures élevées voisines de la Tg, de façon à éviter toute décomposition lors de la polarisation. Il est à noter que cette propriété a également son importance en optique linéaire, car, dans ce domaine, les dispositifs (e. g. guides d'onde) sont mis en oeuvre dans des circuits optoélectroniques et ont à subir des contraintes thermiques sévères. Or, une éventuelle dégradation du polymère s'accompagnerait d'une modification de son indice de réfraction et d'un amoindrissement de sa transparence, ce qui, bien entendu, nuirait gravement à ses qualités techniques.

La plupart des polymères connus, utilisables en optique linéaire et/ou en optique non linéaire, ont des Tg inférieures à 150° C. Ils se désorientent donc trop rapidement aux températures d'application (85-125° C). Il faut savoir que, parmi ces polymères connus, on distingue ceux dans lesquels le chromophore actif est lié par covalence aux chaînes polymères (au sein des chaînes ou de façon pendante latéralement) et ceux dans lesquels on dissout le chromophore (système "guest host").

Pour tenter de satisfaire à cette spécification n° 2, sans sacrifier aux spécifications n° 1 et 3, il a été proposé de mettre en oeuvre des polyesterimides.

C'est ainsi que WU et al décrivent, dans "Appl. Phys. Lett., **58** (3), 21 january 1991, p. 225-227", des polymères électrooptiques polarisés constitués par des polyimides et dans lesquels un chromophore est dissous (système "guest-host"). Ces polyimides sont classiquement obtenus par réaction d'un dianhydride aromatique et d'une diamine, conduisant à un prépolymère polyamide. La transformation en polyimides s'opère par cyclisation (- CO - NH - et - COOH) à très haute température.

Ces matrices polyimides ont des Tg élevées (supérieures à 200° C) et sont thermostables jusqu'à des températures de l'ordre de 350° C. Cependant, ce système antérieur souffre de gros inconvénients, liés :

- d'une part, à la nature "guest-host" :
  . le pourcentage massique en chromophores actifs est nécessairement limité à 20-25 %, de façon à éviter une séparation macroscopique des phases qui favorise des appariements tête-bêche des chromophores. Cela a pour conséquence la diminution de l'"orientabilité" et/ou la création de régions diffusantes de la lumière,
  . les chromophores dissous dans la matrice ont un effet de plastifiant et, par conséquent, baissent la Tg intrinsèque du polymère,
  . l'orientation des chromophores, induite par polarisation, se relâche plus facilement au cours du temps que celle des chromophores liés de manière covalente aux chaînes polymères,
- et, d'autre part, plus spécifiquement au type de polymère :
  . la synthèse des polyimides et, en particulier, l'"imidisation" (par cyclisation des fonctions amides et acides du prépolymère) nécessite de hautes températures (supérieures ou égales à 300° C), auxquelles ne résistent pas la majorité des chromophores connus (détérioration, sublimation). Ils perdent ainsi leur transparence et leur activité en optique non linéaire.

La demande de brevet EURO-PCT **WO-A-91/03 001** (EP 0 438 557) divulgue des polyimides actifs en optique non linéaire, issus de l'imidisation à haute température de prépolymères de polyamides, produits par condensation d'un comonomère du type anhydride aromatique et d'un comonomère du type diamine, l'un des deux comonomères étant porteur d'un chromophore ONL.

Comme indiqué dans WU et al cité ci-avant, mais également dans **US-A-3 179 634, US-A-3 356 648** et dans FEGER et al. Polymers in Information Storage Technology, Ed. Mittal Plenum Press, N. Y., 1989, p. 229, cette imidisation (cyclisation - NH -CO - / - COOH) implique de faire séjourner le polymère à des températures supérieures ou égales à 300° C pendant plusieurs heures. De telles conditions, pourtant nécessaires pour obtenir une imidisation totale, sont délétères pour les chromophores performants en ONL, qui ont pour inconvénient d'être thermosensibles. C'est la raison pour laquelle, dans la synthèse des polyimides selon le **WO-A-91/03 001**, on se garde bien de prévoir des températures d'imidisation supérieures à 200-220° C. Il en découle qu'une importante fraction des fonctions amide/COOH des prépolymères polyamides précurseurs n'est pas transformée en fonctions imides. Or, ceci a pour répercussion directe de conférer au polymère des qualités optiques médiocres et une forte tendance à la reprise en eau, ce qui nuit encore plus auxdites qualités optiques.

Il est, de surcroît, bien connu que l'imidisation de polyamides s'accompagne de la production d'eau. Or, cette dernière peut induire la formation de microcavités concourant à l'atténuation des propriétés OL et ONL [cf. article de H. FRANKE publié dans "Polymers for lightwave and integrated optics" (Ed. Hornak, Marcel DEKKER, Inc., N. Y., 1992, p. 207)].

Dans un tel environnement technique, l'un des objectifs essentiels de la présente invention est de fournir un système polymère/chromophore utilisable en OL et/ou en ONL répondant aux spécifications 1 à 3 ci-dessus et, en particulier, caractérisé par :

- une importante stabilité thermochimique à hautes températures,
- une haute Tg,
- une bonne tenue mécanique,
- une transparence ajustable et suffisante aux longueurs d'onde conventionnelles,

- une solubilité permettant des formages variés et aisés,
- une facilité de synthèse,
- un coût de revient bas,
- et une grande activité ONL.

Un autre objectif de l'invention est de proposer un procédé de préparation d'un système polymère/chromophore, notamment du type de celui évoqué ci-dessus, qui soit économique, aisé à mettre en oeuvre, productif et à hauts rendements.

**EXPOSE SUCCINCT DE L'INVENTION:**

Pour atteindre ces objectifs parmi d'autres, la Demanderesse a eu le mérite :

- de trouver de nouveaux polymères, du type de ceux :
  - . qui comprennent des fonctions répétitives esters **E** et imides **I** et au moins un chromophore,
  - . qui sont sensiblement exempts de fonctions amides récurrentes, cyclisables en imides,
  - . et dont les fonctions de polymérisation sont des fonctions **E**.

Ces nouveaux polymères sont des polyesterimides (**PEI**) et sont tels que définis dans les revendications 5 et 16.

La Demanderesse a également eu le mérite de mettre au point une polyesterification conduisant directement à des polyesterimides du type de ceux cités ci-avant. Ce procédé est défini dans la revendication 1.

**MEILLEURE MANIERE DE REALISER L'INVENTION:**

La présente invention concerne ainsi un polyesterimide utilisable en optique linéaire et/ou en optique non linéaire, du type comprenant des fonctions esters répétitives (**E**) = - CO - O -, des fonctions imides répétitives (**I**) :

$$-CO-\overset{|}{N}-CO-,$$

et au moins un chromophore, caractérisé :

- en ce qu'il contient une quantité de fonctions amides récurrentes cyclisables en imides inférieure ou égale à 5, de préférence à 3 et, plus préférentiellement encore, à 1 % molaire par rapport à la somme des fonctions imides et des fonctions amides cyclisables en imides présentes,
- et en ce que les fonctions de polymérisation sont essentiellement constituées par des fonctions **E**.

L'invention a, par ailleurs, pour objet un procédé de préparation d'un polyesterimide utilisable en optique linéaire et/ou en optique non linéaire, du type comprenant au moins un chromophore, caractérisé en ce qu'il consiste à réaliser une polyestérification à l'aide de comonomères, dont l'un au moins comprend au moins une, de préférence une ou deux, fonction(s) imide(s) cyclisée(s).

Ces nouveaux polymères, qui ont une Tg et une stabilité thermochimique élevées, présentent, en outre, tous les autres avantages escomptés.

Les polymères de l'invention peuvent être, indifféremment, des homopolymères, des copolymères, des oligomères ou des co-oligomères de degré de polymérisation variable. Il peut s'agir de polymères à chaînes linéaires et/ou ramifiées et/ou réticulées.

Par chromophore au sens de la présente invention, on entend toute molécule active en ONL, c'est-à-dire dont l'interaction avec le champ électromagnétique de la lumière génère l'effet optique recherché à des longueurs résonnantes ou non. Dans le présent exposé, un chromophore est représenté par la formule schématique suivante : **D.**$\pi$**.A**, dans laquelle :

- **D** = groupement donneur d'électrons,
- **A** = groupement accepteur d'électrons,
- $\pi$ = groupement transmetteur à électrons $\pi$ délocalisés.

Conformément à un mode préféré de réalisation de l'invention, le polyesterimide ne comprend, sensiblement, que des fonctions imides **I** récurrentes.

De façon générale, les polyesterimides selon l'invention comprennent des chromophores de structures identiques ou différentes, des fonctions répétitives esters **E**, des fonctions imides **I** récurrentes et des radicaux de remplissage **$R^r$,** constitués par des groupements hydrocarbonés, de préférence alkyle et/ou cyclo alkyle et/ou aryle, et/ou alcényle et/ou alcynyle et/ou cycloalcényle et/ou cycloalcynyle, **$R^r$** étant plus préférentiellement sélectionné parmi les cycloalkyles ou alcényles en $C_5$-$C_6$ et/ou parmi les aromatiques.

Avantageusement, chaque chromophore est relié à une chaîne principale polymère par au moins une liaison covalente, l'attache pouvant s'envisager par une seule des deux extrémités du chromophore à l'aide d'un ou deux bras (forme latérale pendante/chaîne principale) ou par chacune des deux extrémités du chromophore (forme coaxiale/chaîne principale).

Les fonctions esters **E** sont celles qui constituent les fonctions de polymérisation, formant des ponts entre les unités récurrentes dans les chaînes principales des polymères. Cela n'exclut pas la possibilité d'en avoir à d'autres endroits dans ces unités récurrentes.

Les fonctions imides **I** récurrentes sont, avantageusement cyclisées, de telle sorte que chacune d'elles forme un motif imide récurrent **I** de formule :

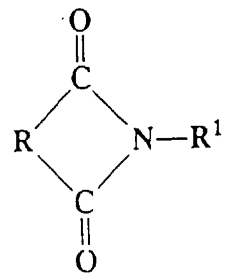

dans laquelle :

- R est un aromatique, un alkyle, linéaire ou branché, un cycloalkyle, un alcényle, linéaire ou branché, ou un cycloalcényle, un alcyne, linéaire ou branché, ou un cycloalcynyle, lesdits radicaux pouvant, éventuellement, être substitués,
- $R^1$ représente un aliphatique, un alicyclique ou un aromatique.

Ces fonctions ou motifs sont, indifféremment, portés coaxialement en chaîne principale et/ou sous forme de groupements pendants.

Pour définir la famille de polyesterimides concernés par l'invention, il est possible de se référer à la formule générale schématique **Fg** d'une unité récurrente, donnée ci-après :

$$\mathbf{Fg} = \left[ (SU_1)_{x_1} \ldots\ldots (SU_i)_{x_i} \ldots\ldots (SU_j)_{x_j} \ldots\ldots (SU_m)_{x_m} \right]_n$$

- $m \geq 1$,
  $\Sigma x_i = 1$ (i = 1 à m)
- $n \geq 1$,
- dans laquelle les **$SU_i$** (i = 1 à m) sont des séquences chimiques formées par des motifs élémentaires choisis parmi les groupements suivants : **I, DπA, E et $R^r$,**
- et l'ensemble des sous-unités constituant l'unité récurrente comprenant au moins une fonction ester **E**, au moins une fonction imide **I**, au moins un chromophore **DπA** et, éventuellement, au moins un radical de remplissage **$R^r$** constitué par un groupement hydrocarboné, de préférence alkyle et/ou cycloalkyle et/ou aryle et/ou alcényle et/ou alcynyle et/ou cycloalcényle et/ou cycloalcynyle et/ou aromatique.

Conformément à l'invention, on dénombre, de préférence, trois classes ***A, B, C***, de séquences chimiques auxquelles les sous-unités **$SU_i$** (i = 1 à m) sont susceptibles d'appartenir :

- ***A*** = .E.DπA.E.I.
- ***B*** = .E.DπA.E.$R^r$,
- ***C*** = .E.$R^r$.E.I.

Il est à noter qu'une même unité récurrente peut contenir différentes variétés chimiques de motifs **I**, **DπA** et de radicaux **$R^r$.**

Suivant une première déclinaison de la formule **Fg**, le polyesterimide est un homopolymère constitué d'une unité récurrente, dans laquelle **$SU_1$** appartient à la classe ***A***, avec **DπA** et **I** correspondant chacun à une seule et même variété chimique.

Suivant une deuxième déclinaison de **Fg,** le polyesterimide est un copolymère dont l'unité récurrente comprend au moins deux sous-unités **$SU_1$, $SU_2$,** appartenant toutes à la classe ***A***, mais avec **DπA** et/ou **I** correspondant à au moins deux variétés chimiques différentes, e. g.:

- **$SU_1$** = **E - DπA - E - I** (classe ***A***),
- **$SU_2$** = **E - DπA' - E - I'** (classe ***A'***).

Suivant une troisième déclinaison de **Fg**, le polyesterimide est un copolymère dont l'unité récurrente comprend au moins deux sous-unités **$SU_1$, $SU_2$** appartenant, respectivement, aux classes ***A*** et ***B***. Il s'agit donc d'une unité récurrente de type ***AB***.

Suivant une quatrième déclinaison de **Fg**, le polyesterimide est un copolymère dont l'unité récurrente comprend au moins deux sous-unités **$SU_1$, $SU_2$** appartenant, respectivement, aux classes ***A*** et ***C***. Il s'agit donc d'une unité récurrente de type ***AC***.

Suivant une cinquième déclinaison de **Fg**, le polyesterimide est un copolymère dont l'unité récurrente comprend au moins deux sous-unités **$SU_1$, $SU_2$** appartenant, respectivement, aux classes ***B*** et ***C.*** Il s'agit donc d'une unité récurrente de type ***BC.***

Suivant une sixième déclinaison de **Fg**, le polyesterimide est un copolymère dont l'unité récurrente comprend au moins trois sous-unités **$SU_1$, $SU_2$, $SU_3$** appartenant, respectivement, aux classes ***A***, ***B*** et ***C***. Il s'agit donc d'une unité récurrente de type ***ABC.***

Dans ces six déclinaisons, il convient de considérer que l'unité récurrente contient au moins une sous-unité **$SU_i$** porteuse de **DπA** (***A*** ou ***B)*** et que $x_i$ est supérieur ou égal à 0,05, de préférence à 0,15 et, plus préférentiellement encore, à 0,3.

Conformément à une disposition avantageuse de l'invention, les polymères <u>**PEI**</u> peuvent se voir attribuer une aptitude à la réticulation, par incorporation de groupements de réticulation **GR** dans les chaînes principales, de façon coaxiale ou pendante latéralement, ou bien encore en bout de chaînes.

Les groupements **GR** sont portés par au moins l'une des sous-unités $(SU_i)_{xi}$ (i = 1 à m) et/ou par au moins l'une des extrémités des chaînes de polymère.

Dans la mesure où une sous-unité **SU** peut contenir **E** et/ou **I** et/ou **$R^r$** et/ou **DπA, GR** peut être lié à au moins une fonction imide **I** et/ou à au moins un chromophore **DπA.**

Concernant la nature des groupements **GR**, on peut préciser qu'ils sont choisis parmi les groupements réactifs comprenant une double liaison et/ou une triple liaison (CC, CN) et/ou un cycle tendu du type cyclobutène, époxy et leurs dérivés, de préférence parmi ceux énumérés ci-après :

maléimide, nadimide, acrylique, méthacrylique, acryalamide, vinyle, styryle, allyle, sylyle, cyanate, isocyanate, thiocyanate, cyanamide, nitrile, époxy, acétylène, benzocyclobutène
ou leurs dérivés.

D'autres exemples de groupements de réticulation **GR**, en particulier de nature divalente, sont donnés ci-après :

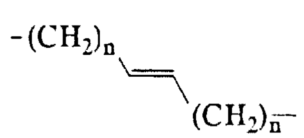
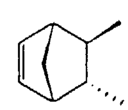
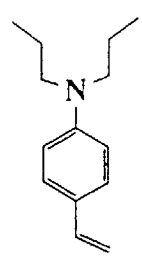

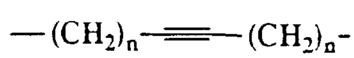

Ces groupements **GR** réticulent, soit directement entre eux, soit par l'intermédiaire d'un auxiliaire de réticulation. Ainsi, conformément à l'invention, au moins une partie des groupements réticulables **GR** sont aptes à réagir avec au

moins un auxiliaire de réticulation, ce dernier étant, de préférence, un composé multifonctionnel à fonctionnalité OH et/ou COX, avec X = OH, halogène (Cl), alcoxyle ($OCH_3$, - O - phényle) aptes à réagir, respectivement, avec des fonctions COX et OH appartenant à **GR.**

A titre d'exemples d'auxiliaires de réticulation, on peut citer : l'éthylèneglycolediacrylate, l'éthylèneglycolediméthacrylate, le divinylbenzène, le phényldiisocyanate, le dimaléimidodiphényl-méthane, le pentaérythritoltriacrylate, le pentaérylthritoltetroltétraméthacrylate, le tris(2-acryloxyéthyl)isocyanurate, ou le trimère d'hexaméthylène diisocyanate ou le triphényl méthane trisisocyanate.

Dans le cas où les **GR** possèdent des fonctions réactives constituées par OH et/ou à COX, X = OH, halogène, tel que Cl, alcoxyles, tels que OMe, OΦ (Φ = phényle), l'auxiliaire de réticulation peut être, par exemple, un tricarboxylate, tel que le 1,3,5-benzène tricarboxylate, un trialcool ou un polyol.

Cette aptitude à la réticulation des polymères de l'invention permet de les rendre insolubles, e. g. par traitement thermique et/ou photochimique. Cela est particulièrement avantageux dans le dépôt de couches successives de polymères pour produire des dispositifs électrooptiques et, notamment, dans la fabrication de guides d'ondes par lithographie.

Les chromophores **DπA** utilisables dans le cadre de l'invention peuvent être de toutes natures appropriées et connues en elles-mêmes, telles que celles définies et exemplifiées dans l'article de H. E. KATZ, C. W. DIRK, K. D. SINGER, T. E. SOHN "Mol. Cryst. Liq. Cryst. inc. non lin. opt." (1988), 157, 525 et dans les demandes de brevets français ayant les numéros suivants : **88-05 214, 88-12 028, 88-12 079, 88-12 080, 89-02 271, 89-04 232, 89-05 870, 89-10 696, 89-10 197, 89-00 377, 90-00 575, 90-02 336, 90-05 420**. Il est, toutefois, préférable de sélectionner ceux comprenant au moins une, de préférence deux, fonctions réactives par estérification, par exemple : OH et COX, avec X = halogène, aryle, alkyle ou OH.

Suivant l'invention, on retient les chromophores les plus performants en ONL et, notamment, ceux du type : diazo, stilbène, alcène ou alcyne.

A titre d'exemples, on peut citer les structures suivantes :

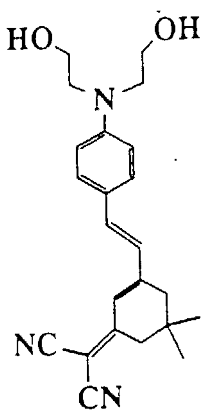

Chr 1

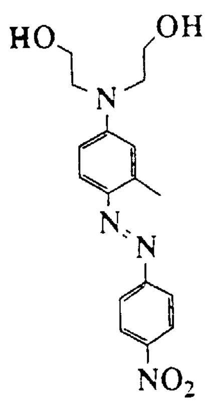

Chr 2

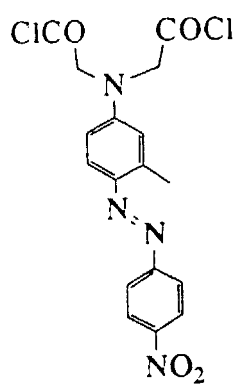

Chr 3

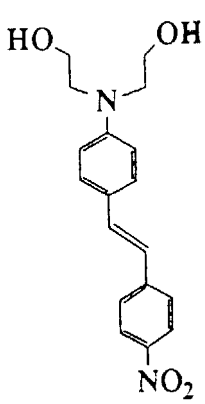

Chr 4

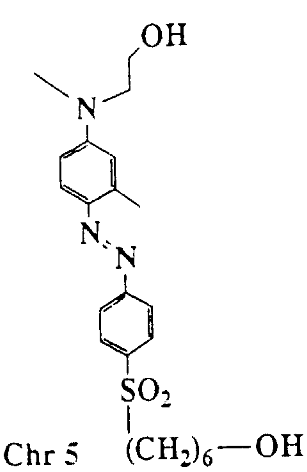

Chr 5

Ces chromophores sont décrits dans les brevets ou articles suivants : EP 0 364 313 (**Chr 1**), MEYRUEIX et al., "Organic Molecules for NLO and Photonics", Ed. Messier et al., Kluwer Academic Publishers 1991, p. 161 (**Chr 2**), YU et al., Macromolecules, 1992, 25, 2609 (**Chr 3**), EP 0 350 **112** (**Chr 4**) et XU et al, Macromolecules, 1992, 25, 6716 (**Chr 5**).

Selon une caractéristique de l'invention, le nombre de chromophore **DπA** par unité récurrente est supérieur à 0 et inférieur ou égal à 1. Il suffit que **DπA** soit présent dans au moins une des sous-unités $\mathbf{SU_1}$ à $\mathbf{SU_m}$. Dans les sous-unités où il peut être absent **DπA** est remplacé par un radical **R**, de préférence dialcoolique et/ou dicarboxylique.
Il est donc tout à fait possible d'ajuster à souhait la proportion de chromophores dans le polymère. Cela a pour avantage de permettre un contrôle fin des propriétés physiques des polymères, telles que l'activité ONL, la transparence, l'indice de réfraction, la Tg et la solubilité.

On a vu ci-dessus que le (ou les) groupement(s) **GR** pouvait(ent) être porté(s) par les chromophores **DπA**. Nombre d'entre eux sont des produits connus. A titre d'exemples, on peut citer ceux divulgués dans XU et al., Macromolecules, 1992, 25, 6714 et XU et al., SPIE matériaux organiques San Diego, Juillet 1993 (1853-22) et, en particulier, ceux énumérés ci-après :

Chr 6

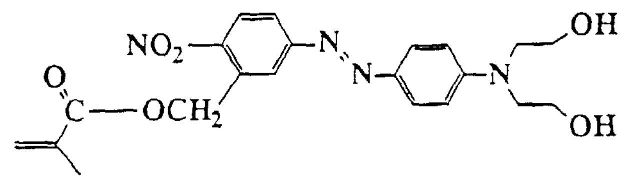

Chr 7

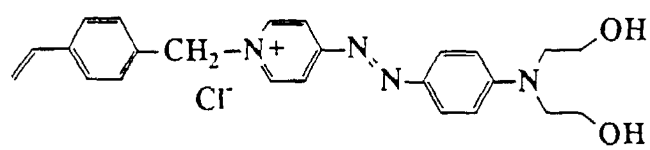

Chr 8

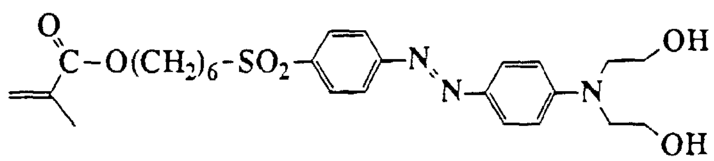

Il convient de souligner que le mode covalent de liaison des chromophores **DπA** aux chaînes polymères, de même qu'une éventuelle réticulation, sont des facteurs qui permettent de limiter la mobilité résiduelle desdits chromophores et, par conséquent, d'augmenter la stabilité d'orientation des polymères une fois polarisés et figés.

Les motifs imides **I**:

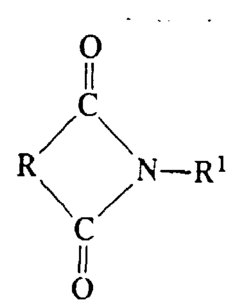

du **PEI** selon l'invention peuvent être de type mono, di ou polyimide, de préférence mono ou diimide. C'est le radical R qui comprend les cycles imides au-delà du premier.

Des exemples de motifs imides **I** qui, rappelons le, peuvent être coaxiaux ou pendants par rapport aux chaînes principales, sont donnés ci-dessous :

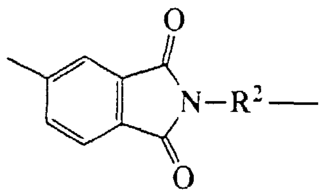

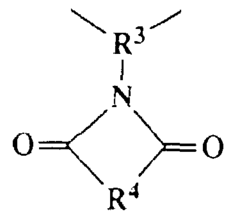

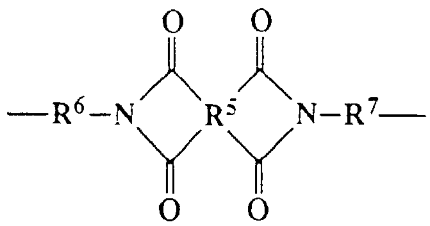

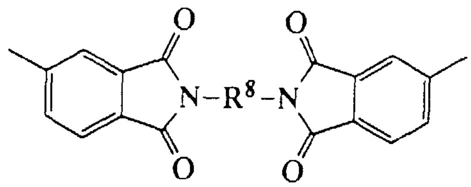

dans lesquelles :

- **$R^2$** = $R^1$ dans la formule du motif **I** : groupement aromatique (e. g. $C_6H_nX_{4-n}$, n = 0 à 4, X = $CF_3$, $CH_3$, F, Cl, Br) ou aliphatique (e. g. : - $(CH_2)_n$, n = 1 à 6),
- **$R^3$** = $R^1$ dans la formule du motif **I** : groupement aromatique (e. g.: $C_6H_nX_{3-n}$, n = 0 à 3, X = $CF_3$, $CH_3$, F, Cl, Br),
- **$R^4$** = R dans la formule du motif **I**:

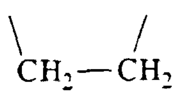

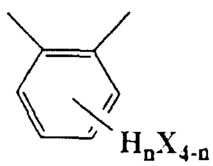

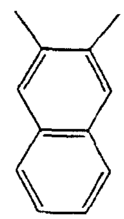

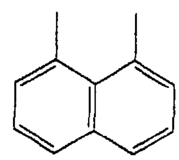

avec X = F, Cl, Br, $CH_3$, $C_2H_5$, $C_6H_5$, $CF_3$ (n = 4 à 0),
- **$R^5$** = :

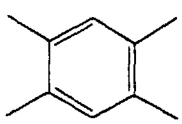

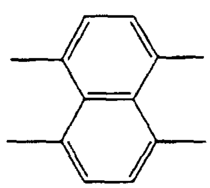

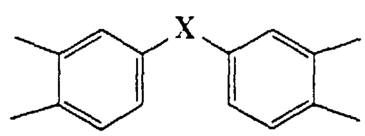

avec X = liaison directe, O, CO, S, $SO_2$, $CH_2$, $C(CF_3)_2$, $C(CF_3(C_6H_5)$, P(O)(C6H5),
- **$R^6$**, **$R^7$** et **$R^8$** = $R^1$ dans la formule du motif **I** : étant identiques ou différents entre eux et répondant à la même définition que celle donnée pour $R^1$ ou $R^2$.

Comme cela ressort de la formule générale des **PEI** de l'invention donnée ci-avant, le nombre de motif **I** par unité récurrente est inférieur ou égal à 1 et supérieur à 0.

Conformément à une variante de l'invention mentionnée ci-dessus, les motifs imides **I** peuvent être porteurs de groupements de réticulation **GR**.

Les radicaux dont les formules sont données ci-après sont des exemples non limitatifs de groupes **I-GR**.

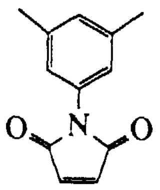 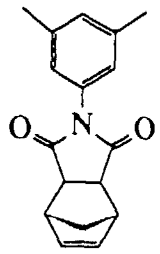 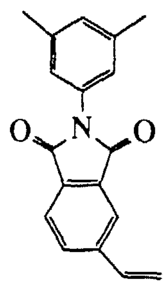

Conformément à une disposition avantageuse de l'invention, la masse d'un **PEI** selon l'invention est supérieure ou égale à 1 000 D, de préférence comprise entre 1 000 et 200 000 D et, plus préférentiellement encore, entre 3 000 et 70 000 D.

La présente invention a, en outre, pour objet de nouveaux **PEI** dont l'une des caractéristiques essentielles et originales est d'être le produit d'une polyestérification de comonomères, dont l'un au moins comprend au moins une, de préférence une ou deux, fonction(s) imide(s) cyclisée(s) ou non, de préférence cyclisée(s).

Ces **PEI** sont utilisables en optique linéaire et/ou en optique non linéaire. Ils comportent donc un chromophore **DπA** qui est présent sur ou qui constitue l'un au moins des comonomères visés ci-dessus.

La présente invention concerne, également, un procédé de préparation d'un polyesterimide du type comprenant au moins un chromophore, selon lequel on réalise une synthèse directe de polyester à partir de comonomères, dont l'un au moins comprend au moins une fonction imide **I** :

$$-CO-\overset{|}{N}-CO$$

ou un motif imide :

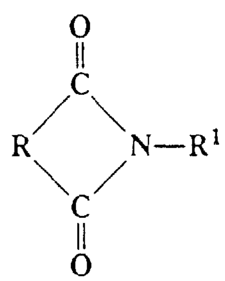

Le (ou les) chromophore est porté ou constitue, lui aussi, au moins l'un des comonomères.

Il s'agit donc d'une polyesterification dans laquelle on met en oeuvre des comonomères présentant chacun au moins deux fonctions de polymérisation, identiques ou différentes et du type acide ou alcool.

Suivant un mode préféré de mise en oeuvre de ce procédé, une partie des comonomères porte deux fonctions alcool, tandis que l'autre partie de ceux-ci est pourvue de deux fonctions de nature carboxylique ou dérivée : COX, avec X = OH, halogène, tel que Cl, Br, F, alcoxyle, tel que O - Me ou O - Ph.

De façon plus préférée encore, on effectue la condensation d'un dialcool et d'un diCOX, comme par exemple un dichlorure d'acide ou un diester (- $COOCH_3$, - $COOC_6H_5$) en présence d'au moins un solvant organique, choisi avantageusement parmi les amides, les éthers cycliques, les solvants azotés, les solvants chlorés, les aromatiques et leurs mélanges. Le DiMéthylacétAmide ou la N-MéthylPyrrolidone, le TétraHydroFurane, le chloroforme, le dichloro 1-2 éthane, le chloro et le dichloro benzène sont des exemples de solvants préférés.

Il est possible d'adjoindre au milieu réactionnel au moins une base, de préférence azotée, dont notamment la pyridine ou la triéthylamine.

De façon plus précise, mais toujours non limitative, l'un des comonomères peut être un chromophore dialcoolique ou diCOX (dicarboxyle) et l'autre un motif imide (**I**), du même type que ceux définis supra et comportant deux fonctions de polymérisation, respectivement, carboxylique (COX) et hydroxyle.

Cette condensation s'opère en solution ou en masse dans des conditions bonnues de l'homme de métier (on peut

consulter, par exemple, la revue de PILATI dans "Comprehensive Polymer Science", Ed. Allen et al., Pergamon Press, 1989, vol. 5, p. 275.

Selon une variante avantageuse de mise en oeuvre du procédé selon l'invention : on met en oeuvre au moins un comonomère de départ comportant au moins un groupement de réticulation **GR** et/ou l'on greffe au moins un groupement de réticulation **GR** sur au moins l'un des comonomères de départ dans une étape préalable ou ultérieurement sur le polymère, lesdits groupements **GR** étant, in fine, localisés :

- soit au sein des chaînes du polymère,
- soit latéralement (**GR** pendants) par rapport aux chaînes du polymère,
- soit sur au moins l'une des extrémités des chaines du polymère.

Ces groupements **GR** sont identiques ou différents entre eux et peuvent être sélectionnés, de préférence, parmi les mêmes familles de radicaux et les mêmes radicaux que ceux énumérés dans la description ci-avant des **PEI** réticulables.

Selon une autre caractéristique avantageuse du procédé de l'invention, on soumet les polyestérimides synthétisés par polycondensation ou polyesterification à un traitement de post polymérisation à haute température, de préférence supérieure ou égale à 100° C, de préférence à 120° C et, plus préférentiellement encore comprise entre 180 et 350° C et inférieure à la température de décomposition thermique des polymères.

Cette post-polymérisation s'opère, de préférence sous vide ou sous un flux de gaz inerte, e. g. d'argon ou d'azote et sur les polymères purs, à l'état solide ou fondu. Elle est, par exemple, mise en oeuvre sur des films ou en masse.

La post-polymérisation peut, éventuellement, être effectuée à l'aide d'un catalyseur à base de titane ou de zirconium.

Ce traitement a pour effet d'augmenter la masse des polymères. Cela est intéressant, notamment, pour augmenter la **Tg** et améliorer la ductilité du matériau.

Les unités récurrentes polycondensables ou polyestérifiables par ce procédé peuvent être du type de celles définies précédemment avec leurs variantes dans la description des nouveaux **PEI** constituant un autre objet de l'invention.

Ainsi, les unités récurrentes peuvent comprendre une ou plusieurs sous-unités comportant, éventuellement, des radicaux de remplissage $\mathbf{R^r}$ définis ci-dessus, en plus des fonctions **E**, des motifs **I**, des groupements **GR** et des chromophores **DπA**.
Il est donc envisageable de synthétiser des copolymères en faisant varier les proportions relatives des constituants **E, I, GR, DπA et** $\mathbf{R^r}$**,** en jouant sur la nature et le contenu des sous-unités et sur leurs pourcentages relatifs. La localisation des fonctions **I** des groupements **GR** et des chromophores **DπA** peut, également, être variable.

Les propriétés des polymères obtenus par le présent procédé pourront être déduites, par analogie, de celles décrites ci-dessus pour les nouveaux **PEI** selon l'invention.

Le procédé selon l'invention constitue une voie parmi d'autres pour l'obtention de ces nouveaux **PEI.**

Les **PEI** selon l'invention peuvent être orientés dans un champ électrique **E** (e.g. 10 à 400 V/µm) à une température voisine de Tg. L'orientation ainsi acquise peut ensuite être figée par refroidissement sous le champ **E**. L'invention concerne également les polymères ainsi obtenus.

Avantageusement, ces polymères "orientés" ont un coefficient électrooptique $r_{33}$ supérieur ou égal à $1 \times 10^{-12}$, de préférence à $5 \times 10^{-12}$ et, plus préférentiellement encore, à $10 \times 10^{-12}$ m/V, pour une tension de polarisation de l'ordre de 100 V/µm.

## APPLICATION INDUSTRIELLE DE L'INVENTION :

En définitive, l'invention permet d'accéder à de nouveaux matériaux polymères utilisables en optique linéaire et/ou en optique non linéaire, dont l'un des atouts est de posséder des températures de transition vitreuse élevées, i. e. supérieures à 130° C.
En conséquence, ils possèdent une grande stabilité d'orientation des chromophores. Faciles à préparer et à mettre en oeuvre (solubilité pour filmature), ces polyesterimides sont également doués d'excellentes propriétés mécaniques et optiques (transparence λ max + 150 nm-2 000 nm, hautes susceptibilités non linéaires du 1er et du 2ème ordre, indice de réfraction ajustable).

Ces **PEI** sont directement applicables pour la réalisation de composants de dispositifs OL du type filtres, polariseurs, guide d'ondes ... ou de composants actifs dans des dispositifs ONL, du type modulateur, coupleur directionnel, bistable optique, film photoconducteur.

La présente invention concerne, également, ces applications des **PEI,** c'est-à-dire des dispositifs OL et/ou ONL réalisés au moins en partie avec au moins un desdits **PEI.**

D'autres avantages et variantes des **PEI** selon l'invention ressortiront bien des exemples qui suivent et qui décrivent

la synthèse des **PEI 1** à **8**, leurs applications dans des dispositifs optiques linéaires et électrooptiques et les propriétés OL et ONL qu'ils développent dans ces dispositifs.

## EXEMPLES

Plusieurs exemples de synthèse de polyestérimides (**PEI**) selon l'invention sont donnés ci-dessous.

### EXEMPLE 1 : SYNTHÈSE DE PEI 1.

Cet exemple concerne la synthèse d'un polymère linéaire contenant le **Chr 1** et un monoimide en groupement pendant. La synthèse se déroule suivant le schéma réactionnel suivant:

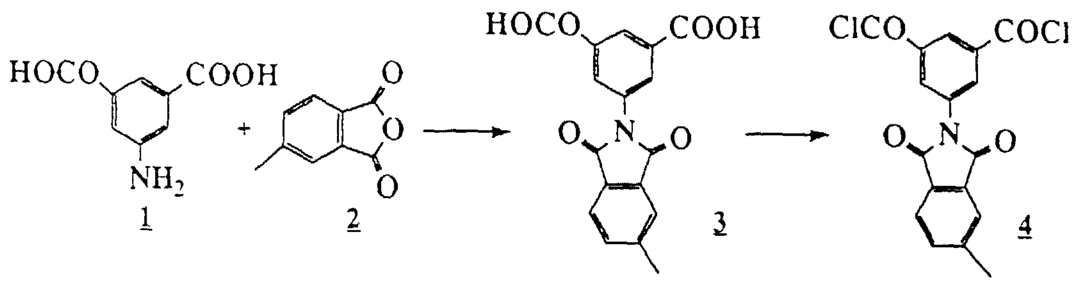

1 2 3 4

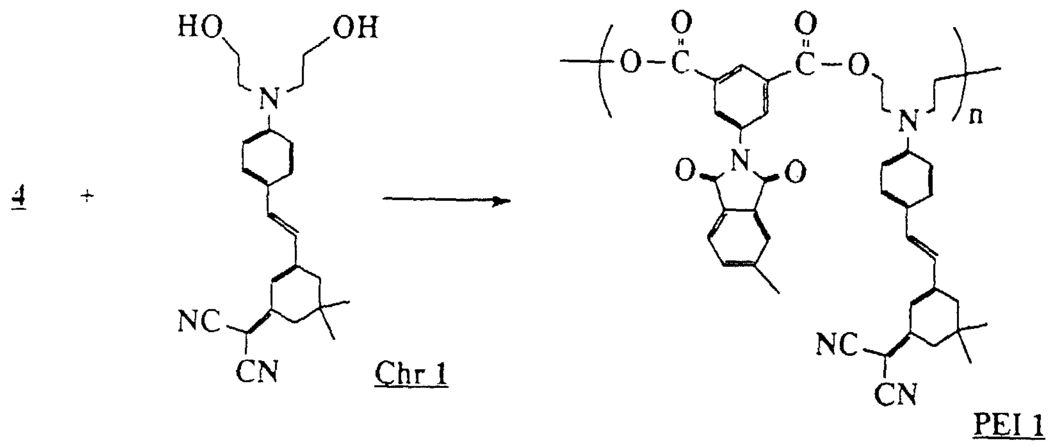

4 Chr 1 PEI 1

Dans un ballon de 1 l sont introduits 11,47 g d'anhydride méthylphtalique (**2**), une quantité équimolaire d'acide 5-aminoisophthalique (**1**) et 300 ml d'acide propionique. Le mélange, maintenu sous agitation, est porté à reflux pendant 20 h. Le produit blanc est ensuite récupéré par filtration, lavé généreusement à l'eau, puis séché. Rendement en produit **3** = 90 %.

11 g du diacide **3**, 30 ml de chlorure de thionyle, 70 ml de toluène et quelques gouttes de diméthyl formamide sont portés à reflux dans un tricol de 250 ml muni d'un condensateur pendant 3 h. Le toluène et l'excès de chlorure de thionyle sont éliminés par distillation et le produit brut est dissous dans un mélange toluène-hexane (200 ml : 1/1) à chaud, puis mis à 0° C. Après 6 h, le produit cristallisé est récupéré par filtration, lavé à l'hexane, puis séché.

Rendement en produit **4** = 90 %.

3 g du chromophore **Chr 1**, une quantité équimolaire du dichlorure d'acide 4, deux équivalents molaires de pyridine anhydre et 8 ml de diméthylacétamide anhydre sont introduits dans un ballon de 50 ml. Le mélange est porté à 80° C et laissé pendant 3 h sous agitation. On ajoute 0,5 ml de méthanol au mélange réactionnel et on laisse agiter une demi-heure. La solution est ensuite versée dans 200 ml de méthanol maintenus sous forte agitation. Le polymère précipité est ensuite récupéré par filtration, lavé au méthanol, puis séché sous vide à 70° C pendant 20 h. Le polymère est soluble dans diméthylacétamide, N-méthylpyrrolidone, chloroforme, tetrahydrofurane et est insoluble dans heptane, diéthyléther et éthanol.

Rendement = 95 %, Mw = 14 000, Tg mesurée en DSC = 175° C.

**EXEMPLE 2 : SYNTHÈSE DE PEI 2.**

Cet exemple concerne la synthèse d'un polymère linéaire contenant le **Chr 1** et un monoimide en chaîne principale. La synthèse se déroule suivant le schéma réactionnel suivant:

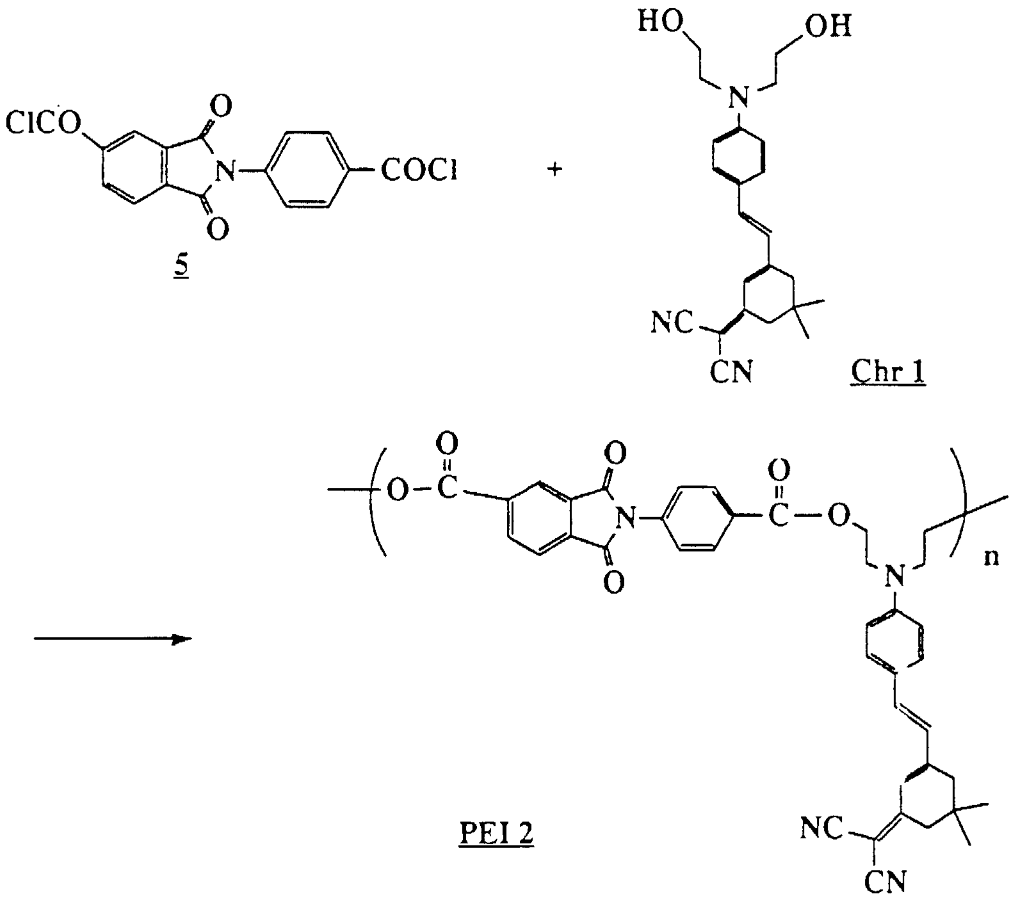

5

Chr 1

PEI 2

Le dichlorure d'acide **5** est synthétisé suivant le mode opératoire décrit dans l'article de PARDEY et al., Macromolecules, 1992, 25, 5060. Le polymère est synthétisé et isolé comme décrit dans l'exemple 1.
Rendement = 92 %, Mw = 14 000, Tg = 175° C.

**EXEMPLE 3 : SYNTHÈSE DE PEI 3.**

Cet exemple concerne la synthèse d'un polymère linéaire contenant le **Chr 1** et un diimide en chaîne principale. La synthèse se déroule suivant le schéma réactionnel suivant :

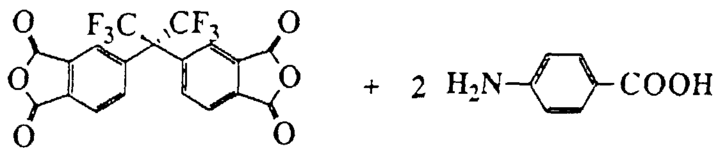

6

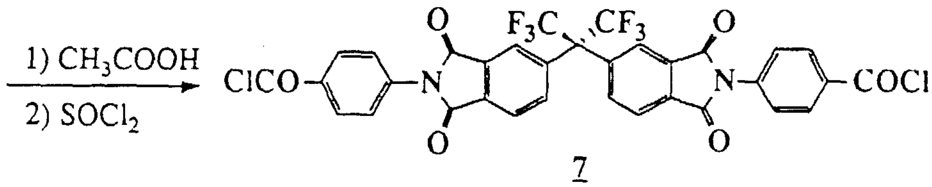


7

7 + Chr1

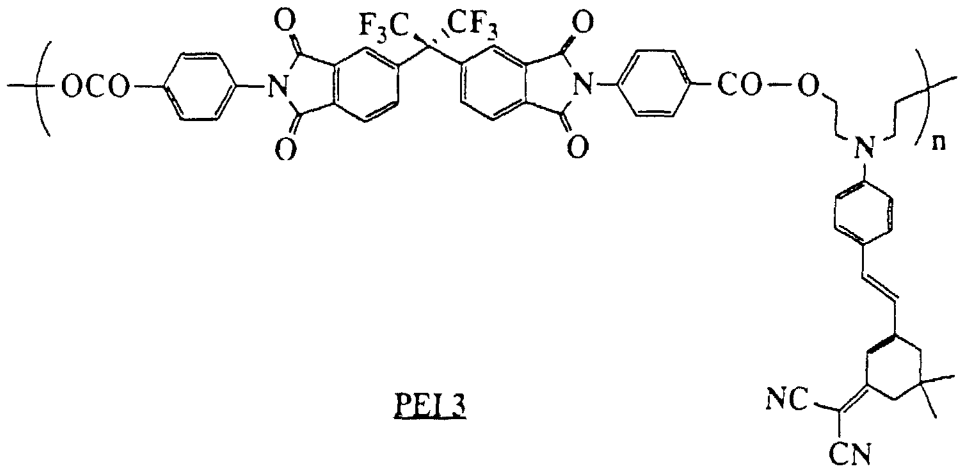

PEI 3

Le dichlorure d'acide **7** est synthétisé par réaction du dianhydride fluoré avec deux équivalents de l'acide p-aminobenzoïque, suivie d'une réaction avec un excès de chlorure de thionyle. Le polymère **PEI 3** est synthétisé comme décrit dans l'exemple 1.
Rendement = 95 %, Mw = 6 300, Tg = 187° C.

**EXEMPLE 4 : SYNTHÈSE DE PEI 4.**

Cet exemple concerne la synthèse d'un polymère linéaire contenant le **Chr 2** et un diimide en chaîne principale. La synthèse se déroule suivant le schéma suivant:

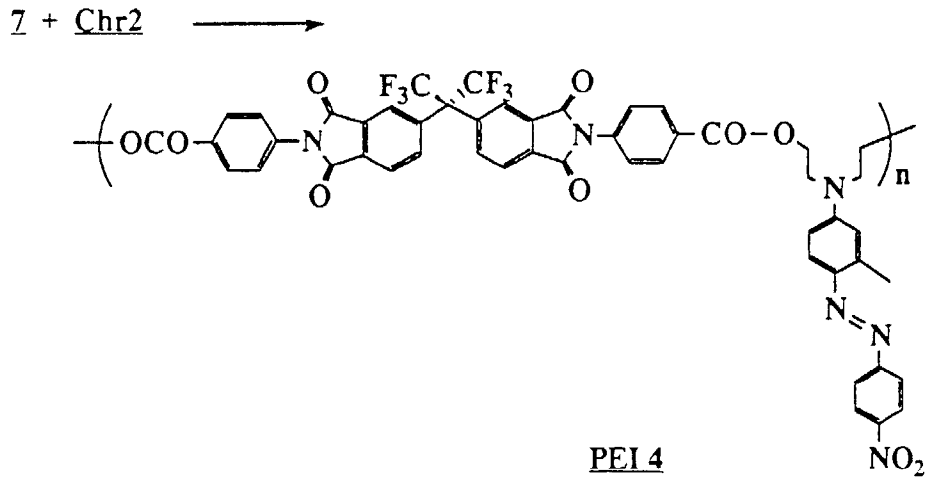


PEI 4

Le polymère est synthétisé en faisant réagir une quantité équimolaire de chlorure d'acide **7** et de chromophore **Chr 2** (commercialisé sous le nom "DISPERSE RED 17" par VILMAX) dans la diméthylacétamide à 60° C pendant 10 h, en présence de deux équivalents molaires de pyridine. Le polymère est ensuite isolé par précipitation dans le méthanol, puis séché sous vide à 60° C pendant 48 h. Rendement = 85 %, Tg = 183° C, Mw = 11 000.

**EXEMPLE 5 : POST-POLYMÉRISATION DE PEI 1.**

1 g de **PEI 1** (exemple 1 : Mw = 10 000, Tg = 175° C) est chauffé sous vide ($10^{-2}$ mmHg) à 200° C pendant 1 h et ensuite 2 h à 250° C. Le polymère ainsi récupéré a une Mw de 18 000, une Tg de 180° C et est soluble dans la diméthylacétamide, N-méthylpyrolidone et le chloroforme. Avantageusement la post-polymérisation peut aussi être effectuée sur film déposé sur un substrat (verre, silicium, silice, métallique ou polymère) pour améliorer les propriétés mécaniques du polymère.

**THERMOSTABILITÉ DES POLYMÈRES PEI 1 ET PEI 4**

La thermostabilité des polymères est déterminée par spectroscopie UV-visible d'un film d'environ 0,3 micron déposé sur verre, puis séché sous vide à 150° C pendant 12 h et ensuite soumis à un traitement thermique à 200° C pendant 2 h sous vidé et un autre à 250° C pendant 2 h. Dans le premier cas, on observe une baisse de la densité optique du pic maximal d'environ 1 % et, dans le deuxième cas, une baisse d'environ 5 %.

**ECEMPLE 6: SYNTHÈSE DE PEI 5.**

Cet exemple concerne un copolyesterimide synthétisé à partir du chromophore **Chr 2** et un mélange 60/40 de dichlorure d'acide **8** (réprésenté ci-dessous et synthétisé de la même façon que le dichlorure d'acide **4**) et de dichlorure de térephtaloyl.

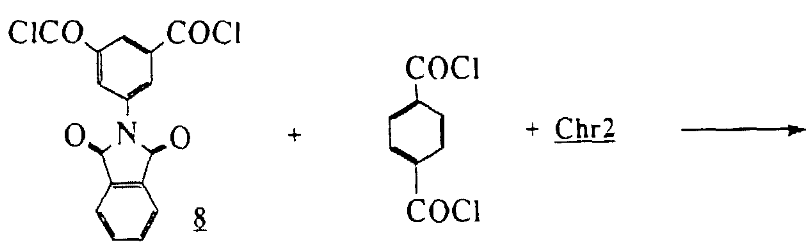

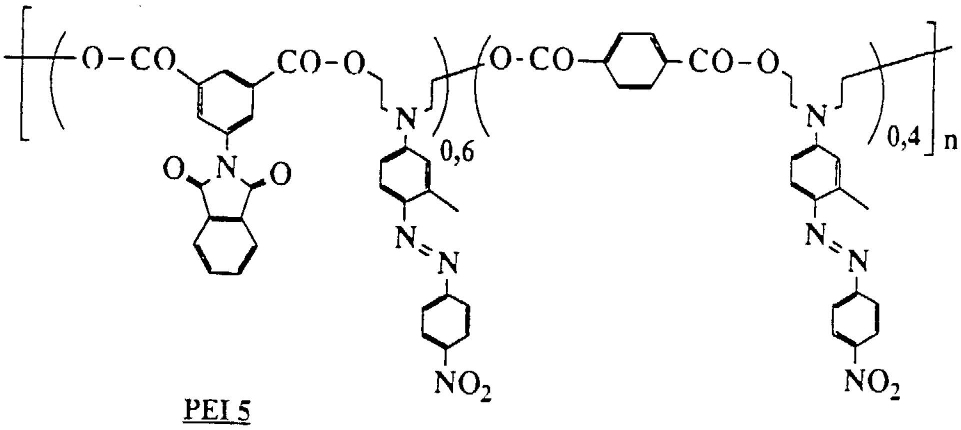

PEI 5

Le polymère est synthétisé dans le tétrahydrofurane en faisant réagir 8 mmol de **Chr 2,** 4,8 mmol de **8**, 3,2 mmol de dichlorure de téréphtaloyl en présence de 16,4 mmol de triéthylamine sous reflux pendant 4 h. La solution est filtrée, puis versée dans 300 ml de méthanol maintenu sous agitation. Le polymère est récupéré par filtration, puis séché sous vide à 50° C pendant 24 h.
Rendement = 82 %, Mw = 17 000, Tg = 152° C.

**EXEMPLE 7: SYNTHÈSE DE PEI 6.**

Cet exemple concerne la synthèse d'un copolyesterimide synthétisé à partir du dichlorure d'acide **5**, un mélange 70/30 de chromophore **Chr 1** et le dialcool **9**.

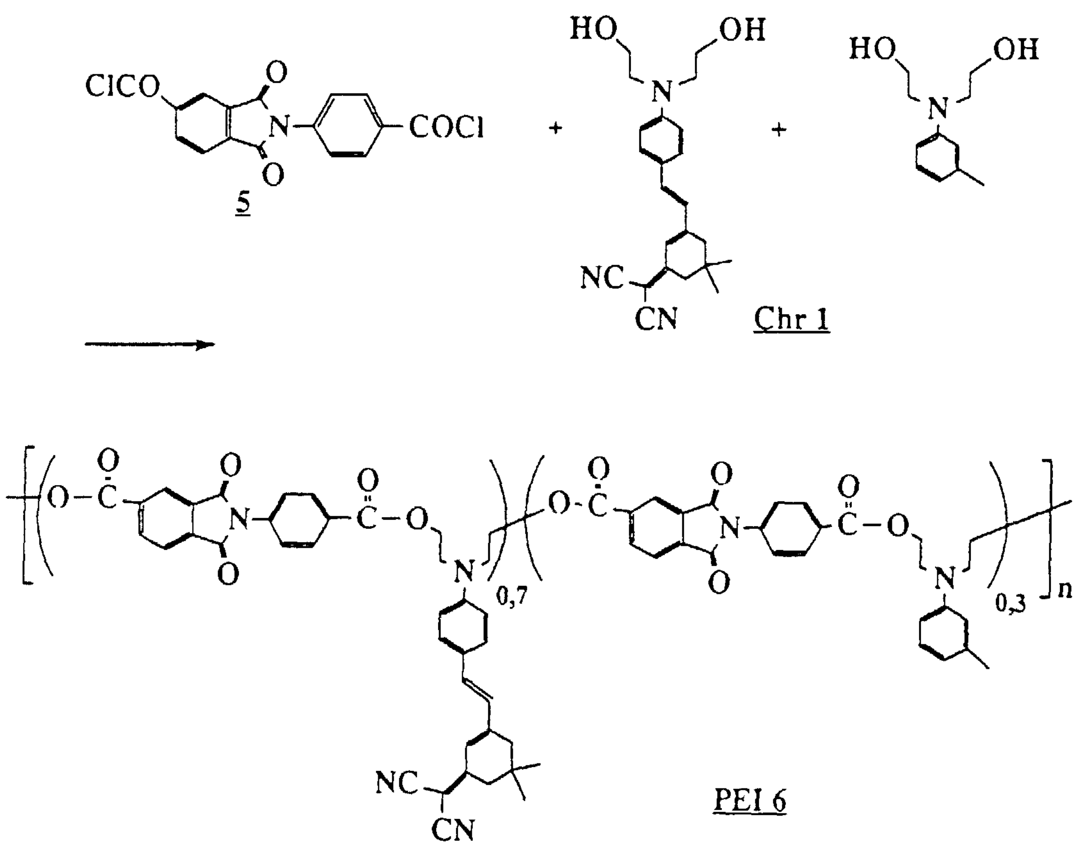

5

Chr 1

PEI 6

Ce copolymère est synthétisé comme dans l'exemple 1, en faisant réagir un équivalent de **5** avec 0,7 équivalent

de chr 1 et 0,3 équivalent de métatoluidine diéthanolamine.
Rendement = 92 %, Mw = 9 000, Tg = 169° C.

**EXEMPLE 8 : SYNTHÈSE DE PEI 7.**

Cet exemple concerne la synthèse d'un polyesterimide réticulable dans lequel des fonctions réactives maléimides sont placées en bout de chaîne. Il s'agit du polyesterimide **PEI 4** synthétisé avec un léger excès de chromophore **Chr 2,** afin d'obtenir un polymère terminé par des fonctions alcools que l'on fait réagir avec le chlorure de maléimido benzoïque.

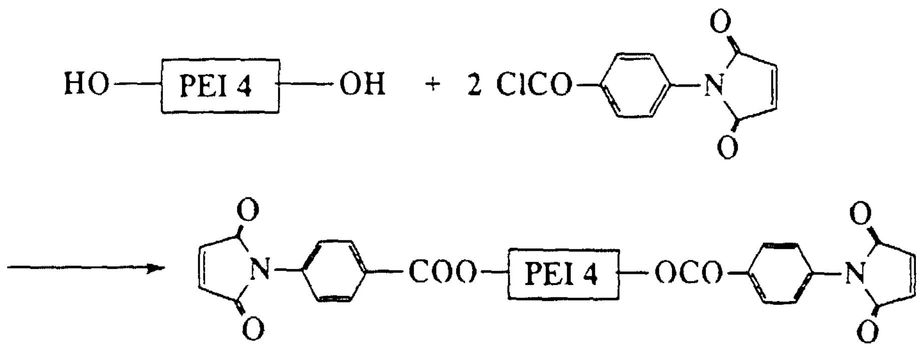

PEI 7

En solution dans la diméthylacétamide, on fait réagir 2 g de **Chr 2** avec 3,36 g du dichlorure d'acide **7** (0,8 équivalent) en présence d'une quantité stoechiométrique de pyridine à 60° C pendant 6 h. On ajoute ensuite 425 mg de chlorure de maléimidobenzoique et une quantité équimolaire de pyridine et on laisse réagir à température ambiante pendant 16 h. Le polymère est récupéré par précipitation dans le méthanol, filtration et séchage sous vide à 40° C pendant 12 h.
Rendement = 85 %, Tg = 182, Mw = 8 000.
Après 1 h à 210° C, la Tg du polymère est de 205° C et le polymère est insoluble dans le tétrahydrofurane, la diméthylacétamide et la N-méthylpyrrolidone. Un film de 2 microns d'épaisseur de ce polymère est obtenu par spin-coating et par un traitement thermique à 210° C pendant 1 h, le film devient insoluble dans la diméthylacétamide.
La réticulation thermique de **PEI 7** à 160° C pendant 1 h et 220° C pendant 30 min, en présence de 5 % massique de pentaérythritoltriacrylate, donne, comme précédemment, une matrice insoluble.

**EXEMPLE 9 : SYNTHÈSE DE PEI 8.**

Cet exemple concerne la synthèse d'un polyesterimide dans lequel des fonctions réactives méthacrylates sont placées sur le chromophore. Il s'agit du polymère synthétisé à partir du chromophore **Chr 6** et du dichlorure d'acide **8**.

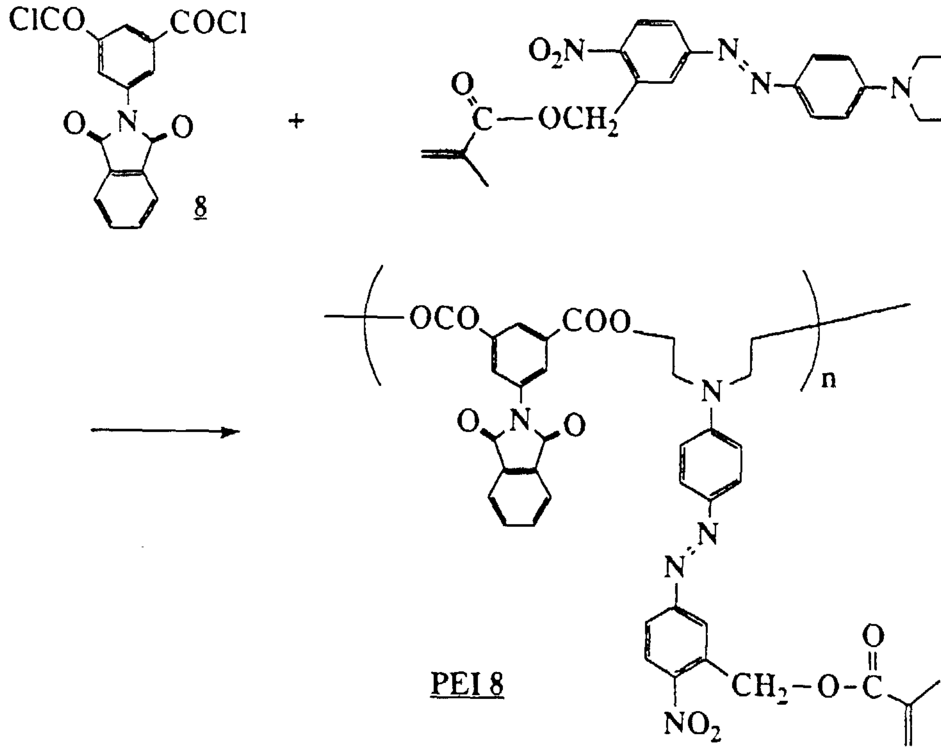

8

PEI 8

En solution dans le dioxane, on fait réagir 2 g de **Chr 8** avec un équivalent molaire de **8** en présence de deux équivalents de pyridine à 50° C sous agitation pendant 3 h. Le polymère est récupéré par précipitation dans le méthanol, filtration et séchage sous vide à 30° C pendant 24 h.

Rendement = 96 %, Mw = 6 500.

Le polymère en solution dans la diméthylacétamide (30 % en poids) est déposé par spin-coating sur une plaque de verre, puis séché à 50° C pendant 6 h. Après un traitement thermique à 200° C pendant 2 h, le polymère est insoluble dans la diméthylacétamide et le tétrahydrofurane.

**EXEMPLE 10 : FILMATURE, POLARISATION ET CARACTÉRISATION ÉLECTROOPTIQUE DU POLYMÈRE PEI 1.**

Le **PEI 1** de l'exemple 1 est dissous sous atmosphère d'azote, dans la diméthylacétamide (concentration massique de 30 %). La solution est filtrée sur un filtre PTFE de 0,2 micron, puis filmée par la technique "spin-coating" (1 500 tr/min) sur un substrat de verre (corning 7059). Le film est séché sous vide à 150° C pendant 2 h et ensuite à 250° C pendant 2 h. On obtient un film d'environ 2 microns. L'indice de réfraction est obtenu par la méthode de couplage des modes d'un faisceau lumineux dans le film sur un appareil Metricon 2010. Il est de 1,736 à 815 nm et 1,681 à 1 300 nm. Les pertes optiques sont obtenues par la méthode du prisme glissant (d'après WEBER et al., Appl. Opt., 1973, 12, 755 et FRANKE et al., SPIE, vol. 682, 1986, 191). On mesure une atténuation optique de l'ordre de 0,8 à 1,5 dB/cm à 1 300 et 1 550 nm.

Pour les caractérisations en optique non linéaire, le film (2,6 microns) est déposé, comme précédemment, sur du verre recouvert d'une couche d'or de 200 Angströms et après séchage, une deuxième couche d'or est déposée sur la face supéneure du film et constitue la deuxième électrode de polarisation. Le film métallisé est introduit dans une chambre optique maintenue sous atmosphère d'azote. Le film est ensuite porté à 175° C et une tension continue de polarisation **E** de 260 volts est appliquée durant 1 h. L'échantillon est ensuite refroidi à température ambiante en maintenant la tension de polarisation. Le coefficient électrooptique $r_{33}$ du film est ensuite mesuré dans la chambre optique, par interférométrie FABRY-PEROT. Cette technique est exposée en détail par MEYRUEIX et al. dans "Non Linear Optics", vol. 1, p. 201, 1991. Pour **E** = 30 et 260 V, on mesure des $r_{33}$, respectivement égaux à 1,7 et 14 pm/V pour une longueur d'onde de 1 320 mm.

La stabilité de ce coefficient électrooptique est excellente, la décroissance de $r_{33}$ est non mesurable à 20° C et à 125° C, $r_{33}$ décroît de 10 % en 50 h.

## Revendications

1. Procédé de préparation d'un polyesterimide transparent et/ou actif en optique non linéaire, du type comprenant au moins un chromophore, qui consiste à réaliser une polyestérification à l'aide de comonomères, dont l'un au moins comprend au moins un, de préférence un ou deux motifs imide de formule :

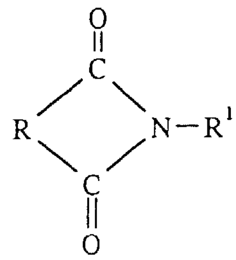

dans laquelle :

- R est un aromatique, un alkyle, linéaire ou branché, un cycloalkyle, un alcényle, linéaire ou branché, ou un cycloalcényle, un alcyne, linéaire ou branché, ou un cycloalcynyle, lesdits radicaux pouvant, éventuellement, être substitués,
- $R^1$ représente un aliphatique, un alicyclique ou un aromatique.

2. Procédé de préparation selon la revendication 1, caractérisé en ce que l'un au moins des comonomères est ou porte le chromophore de structure **D$\pi$A**.

3. Procédé selon la revendication 1 ou 2, caractérisé :

- en ce que l'on met en oeuvre au moins un comonomère de départ comportant au moins un groupement de réticulation **GR** et/ou l'on greffe au moins un groupement de réticulation **GR** sur au moins l'un des comonomères de départ dans une étape préalable, ou ultérieurement sur le polymère, lesdits groupements **GR** étant, in fine, localisés :

  . soit au sein des chaînes du polymère,
  . soit latéralement (**GR** pendants) par rapport aux chaînes du polymère,
  . soit sur au moins l'une des extrémités des chaînes du polymère,

- et en ce que ces **GR** sont identiques ou différents entre eux sur un même polymère.

4. Procédé selon l'une quelconque des revendications 1 à 3, caractérisé en ce que l'on soumet le polymère obtenu à un traitement de post-polymérisation consistant au chauffage à une température supérieure ou égale à 100° C, de préférence à 120° C et, plus préférentiellement encore comprise entre 180 et 350° C, de préférence sous vide.

5. Polyesterimide, tel qu'obtenu par le procédé selon l'une quelconque des revendications 1 à 4, utilisable en optique linéaire et/ou en optique non linéaire, du type comprenant des fonctions esters répétitives **E** = - CO - O -, des motifs imides répétitifs **I** de formule suivante :

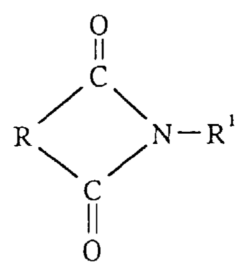

dans laquelle :

- R est un aromatique, un alkyle, linéaire ou branché, un cycloalkyle, un alcényle, linéaire ou branché, ou un cycloalcényle, un alcyne, linéaire ou branché, ou un cycloalcynyle, lesdits radicaux pouvant, éventuellement, être substitués,
- $R^1$ représente un aliphatique, un alicyclique ou un aromatique,

et au moins un chromophore,
caractérisé en ce qu'il est exempt de fonctions amides cyclisables en imides.

**6.** Polyesterimide selon la revendication 5, caractérisé en ce qu'il possède une unité récurrente répondant à la formule **Fg** schématique suivante :

$$Fg = -[ (SU_1)_{x_1} \ldots\ldots (SU_i)_{x_i} \ldots\ldots (SU_j)_{x_j} \ldots\ldots (SU_m)_{x_m} ]_n-$$

- $m \geq 1$,
- $\Sigma x_i = 1$ (i = 1 à m),
- $n \geq 1$,
- dans laquelle les $\mathbf{SU_i}$ (i = 1 à m) sont des séquences chimiques formées par des motifs élémentaires choisis parmi les groupements suivants : **I, DπA, E et $R^r$**,
- et l'ensemble des sous-unités constituant l'unité récurrente comprenant au moins une fonction ester **E**, au moins une fonction imide **I**, au moins un chromophore **DπA** et, éventuellement, au moins un radical de remplissage $\mathbf{R^r}$ constitué par un groupement hydrocarboné, de préférence alkyle et/ou cycloalkyle et/ou aryle et/ou alcényle et/ou alcynyle et/ou cycloalcényle et/ou cycloalcynyle et/ou aromatique.

**7.** Polyesterimide selon la revendication 6, caractérisé en ce que les sous-unités $\mathbf{(SU_i)_{Xi}}$ (i = 1 à m) sont susceptibles d'appartenir aux trois classes de séquences chimiques suivantes :

- ***A*** = E.DπA.E.I,
- ***B*** = E.DπA.E.$R^r$,
- ***C*** = E.$R^r$.E.I.

**8.** Polyesterimide selon la revendication 6 ou la revendication 7, caractérisé en ce qu'il est constitué par un homopolymère constitué d'une unité récurrente dans laquelle $\mathbf{SU_1}$ appartient à la classe ***A***, avec **DπA** et **I** correspondant chacun à une seule et même variété chimique.

**9.** Polyesterimide selon la revendication 7, caractérisé en ce qu'il est constitué par un copolymère dont l'unité récurrente comprend :

- au moins deux sous-unités $\mathbf{(SU_i)_{Xi}}$, $\mathbf{(SU_j)_{Xj}}$ différentes :
  . de type ***A*** (***AA***'),
  . de type ***AB***,
  . de type ***AC,***
  . de type ***BC,***
- ou au moins trois sous-unités $\mathbf{(SUi)_{Xi}}$, $\mathbf{(SU_j)_{Xj}}$, $\mathbf{(SU_k)_{Xk}}$ différentes, du type ***ABC.***

**10.** Polyesterimide selon la revendication 7 ou la revendication 9, caractérisé en ce que l'unité récurrente contient au moins une sous-unité $\mathbf{(SU_i)_{xi}}$ porteuse de **DπA** (***A*** ou ***B***) et en ce que $X_i$ est supérieur ou égal à 0,05, de préférence à 0,15 et, plus préférentiellement encore, à 0,3.

**11.** Polyesterimide selon l'une quelconque des revendications 5 à 10, caractérisé en ce qu'il est pourvu de groupements **GR** de réticulation.

**12.** Polyesterimide selon la revendication 11, caractérisé en ce que les groupements **GR** sont portés par au moins l'une des sous-unités $\mathbf{(SU_i)_{xi}}$, et/ou par au moins l'une des extrémités des chaines de polymère.

**13.** Polyesterimide selon la revendication 11 ou la revendication 12, caractérisé en ce que **GR** est lié à au moins une fonction imide (**I**) et/ou à au moins un chromophore **D**π**A**.

**14.** Polyesterimide selon l'une quelconque des revendications 11 à 13, caractérisé en ce qu'au moins une partie des groupements réticulables **GR** sont aptes à réagir avec au moins un auxiliaire de réticulation.

**15.** Polyesterimide selon l'une quelconque des revendications 5 à 14, caractérisé en ce que sa masse moléculaire est supérieure ou égale à 1 000 D, de préférence comprise entre 1 000 et 200 000 D et, plus préférentiellement encore, entre 3 000 et 70 000 D.

**16.** Polyesterimide utilisable en optique linéaire et/ou en optique non linéaire, du type comprenant au moins un chromophore, caractérisé en ce qu'il est obtenu par polyesterification de comonomères dont l'un au moins comprend au moins un, de préférence un ou deux, motif(s) imide(s) et en ce qu'il est exempt de fonctions amides cyclisables en imides.

**17.** Polyesterimide selon la revendication 16, caractérisé en ce que l'un au moins des comonomères est ou porte le chromophore **D**π**A**.

**18.** Dispositif d'optique linéaire et/ou d'optique non linéaire, caractérisé en ce qu'il est réalisé, au moins en partie, avec au moins un polyesterimide obtenu par le procédé selon l'une quelconque des revendications 1 à 4 et/ou avec au moins un polyesterimide selon l'une quelconque des revendications 5 à 17.

**Patentansprüche**

**1.** Verfahren zur Herstellung eines durchsichtigen und/oder nichtlinear-optischen Polyesterimids, das mindestens ein Chromophor enthält, das darin besteht, mit Hilfe von Comonomeren eine Veresterungsreaktion unter Bildung eines Polyesters durchzuführen, wobei mindestens eines der Monomere mindestens eine und vorzugsweise eine oder zwei Imid-Einheiten der Formel

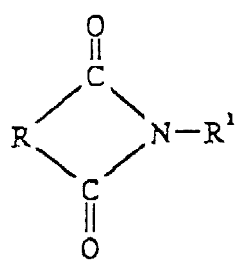

aufweist, in der bedeuten:

- R einen aromatischen Rest, geradkettiges oder verzweigtes Alkyl oder Cycloalkyl, geradkettiges oder verzweigtes Alkenyl oder Cycloalkenyl, geradkettiges oder verzweigtes Alkinyl oder Cycloalkinyl, wobei diese Reste gegebenenfalls substituiert sind,
- $R^1$ einen aliphatischen, alicyclischen oder aromatischen Rest.

**2.** Herstellungsverfahren nach Anspruch 1, dadurch gekennzeichnet, daß mindestens eines der Comonomeren das Chromophor der Struktur DπA ist oder dieses Chromophor trägt.

**3.** Verfahren nach Anspruch 1 oder 2, dadurch gekennzeichnet,

- daß mindestens ein Ausgangscomonomer eingesetzt wird, das mindestens eine Vernetzungsgruppe GR aufweist, und/oder daß mindestens eine Vernetzungsgruppe GR auf mindestens eines der Ausgangscomonomere aufgepfropft wird in einem vorab oder später am Polymer durchgeführten Verfahrensschritt, wobei die Gruppen GR schließlich angeordnet ist:

  - entweder in den Polymerketten,

- oder seitlich (als GR-Seitenketten), bezogen auf die Polymerketten,
- oder an mindestens einem der Kettenenden der Polymerketten,

- und daß diese Gruppen GR innerhalb eines Polymers gleich oder verschieden sind.

**4.** Verfahren nach einem der Ansprüche 1 bis 3, dadurch gekennzeichnet, daß das erhaltene Polymer einer Nachpolymerisationsbehandlung unterzogen wird, die aus einem Erwärmen auf eine Temperatur von mindestens 100 °C, vorzugsweise mindestens 120 °C und noch bevorzugter 180 bis 350 °C, vorzugsweise unter Vakuum, besteht.

**5.** Polyesterimid, das nach dem Verfahren nach einem der Ansprüche 1 bis 4 hergestellt ist, das in der linearen Optik und/oder der nichtlinearen Optik verwendbar ist, das sich wiederholende Estergruppen E = -CO-O-, sich wiederholende Imid-Einheiten I der folgenden Formel

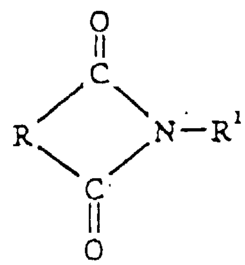

,

in der bedeuten:

- R einen aromatischen Rest, geradkettiges oder verzweigtes Alkyl oder Cycloalkyl, geradkettiges oder verzweigtes Alkenyl oder Cycloalkenyl, geradkettiges oder verzweigtes Alkinyl oder Cycloalkinyl, wobei diese Reste gegebenenfalls substituiert sind,
- $R^1$ einen aliphatischen, alicyclischen oder aromatischen Rest.

und mindestens ein Chromophor aufweist,
dadurch gekennzeichnet, daß
das Polyesterimid frei von Amidgruppen ist, die durch Cyclisierung in Imidgruppen überführbar sind.

**6.** Polyesterimid nach Anspruch 5, dadurch gekennzeichnet, daß es eine wiederkehrende Einheit der folgenden schematischen Formel Fg

$$Fg = \left[ (SU_1)_{X1} \ldots\ldots (SU_i)_{Xi} \ldots\ldots (SU_j)_{Xj} \ldots\ldots (SU_m)_{Xm} \right]_n$$

aufweist, worin

- $m \geq 1$,
- $\Sigma x_i = 1$ (i = 1 bis m)
- $n \geq 1$,
- $SU_i$ (i = 1 bis m) chemische Sequenzen sind, die aus Grundeinheiten gebildet sind, die unter den folgenden Gruppen I, DπA, E und $R^r$ ausgewählt sind,
- wobei die Gesamtheit der Untereinheiten SU, die die wiederkehrende Einheit bilden, mindestens eine Estergruppe E, mindestens eine Imidgruppe I, mindestens ein Chromophor DπA und gegebenenfalls mindestens einen Zwischenrest $R^r$ aufweist, der aus einer Kohlenwasserstoffgruppe, vorzugsweise Alkyl und/oder Cycloalkyl und/oder Aryl und/oder Alkenyl und/oder Alkinyl und/oder Cycloalkenyl und/oder Cycloalkinyl und/oder einer aromatischen Gruppe, besteht.

**7.** Polyesterimid nach Anspruch 6, dadurch gekennzeichnet, daß die Untereinheiten $(SU_i)_{Xi}$ (i = 1 bis m) zu den drei folgenden Klassen chemischer Sequenzen gehören können:

- *A* = E.DπA.E.I,
- *B* = E.DπA.E.$R^r$,
- *C* = E.$R^r$.E.I.

**8.** Polyesterimid nach Anspruch 6 oder 7, dadurch gekennzeichnet, daß es aus einem Homopolymer besteht, das aus einer wiederkehrenden Einheit aufgebaut ist, deren Untereinheit $SU_I$ zu der Klasse A gehört, worin DπA und I jeweils einer einzigen chemischen Molekülsorte entsprechen.

**9.** Polyesterimid nach Anspruch 7, dadurch gekennzeichnet, daß es aus einem Copolymer besteht, dessen wiederkehrende Einheit

- mindestens zwei verschiedene Untereinheiten $(SU_i)_{Xi}$, $(SU_j)_{Xj}$ vom
    - Typ *A (AA')*
    - Typ *AB,*
    - Typ *AC,*
    - Typ *BC,*
- oder mindestens drei verschiedene Untereinheiten $(SU_i)_{Xi}$, $(SU_j)_{Xj}$; $(SU_k)_{Xk}$ vom Typ *ABC*

aufweist.

**10.** Polyesterimid nach Anspruch 7 oder 9, dadurch gekennzeichnet, daß die wiederkehrende Einheit mindestens eine Untereinheit $(SU_i)_{Xi}$ enthält, die eine Gruppe DπA *(A* oder *B)* trägt, und daß $X_i$ größer als oder gleich bevorzugter größer als oder gleich 0,3 ist.

**11.** Polyesterimid nach einem der Ansprüche 5 bis 10, dadurch gekennzeichnet, daß es mit Vernetzungsgruppen GR versehen ist.

**12.** Polyesterimid nach Anspruch 11, dadurch gekennzeichnet, daß mindestens eine der Untereinheiten $(SU_i)_{Xi}$ und/oder mindestens eines der Kettenenden der Polymerketten die Gruppen GR trägt.

**13.** Polyesterimid nach Anspruch 11 oder 12, dadurch gekennzeichnet, daß die Gruppe GR mit mindestens einer Imidgruppe (I) und/oder mit mindestens einem Chromophor DπA verbunden ist.

**14.** Polyesterimid nach einem der Ansprüche 11 bis 13, dadurch gekennzeichnet, daß mindestens ein Teil der vernetzbaren Gruppen GR befähigt ist, mit mindestens einem Vernetzungsmittel zu reagieren.

**15.** Polyesterimid nach einem der Ansprüche 5 bis 14, dadurch gekennzeichnet, daß seine Molekülmasse mindestens 1 000 D, vorzugsweise 1 000 bis 200 000 D und noch bevorzugter 3 000 bis 70 000 D beträgt.

**16.** Polyesterimid, das in der linearen Optik und/oder der nichtlinearen Optik verwendbar ist, das mindestens ein Chromophor enthält, dadurch gekennzeichnet, daß es durch Veresterung von Comonomeren unter Bildung eines Polyesters hergestellt wird, wobei mindestens eines der Monomere mindestens eine und vorzugsweise eine oder zwei Imid-Einheit(en) enthält, und daß das Polyesterimid frei von Amidgruppen ist, die durch Cyclisierung in Imidgruppen überführbar sind.

**17.** Polyesterimid nach Anspruch 16, dadurch gekennzeichnet, daß mindestens eines der Comonomere das Chromophor DπA ist oder dieses Chromophor trägt.

**18.** Linear-optische und/oder nichtlinear-optische Vorrichtung, dadurch gekennzeichnet, daß sie mindestens teilweise mit mindestens einem Polyesterimid, das nach dem Verfahren nach einem der Ansprüche 1 bis 4 hergestellt ist, und/oder mit mindestens einem Polyesterimid nach einem der Ansprüche 5 bis 17 erzeugt ist.

## Claims

**1.** A method of preparing a polyesterimide which is transparent and/or active in non-linear optics, and which is of the

type comprising at least one chromophore, which consists in carrying out a polyesterification with the aid of co-monomers, one at least of which comprises at least one, preferably one or two imide moieties of formula:

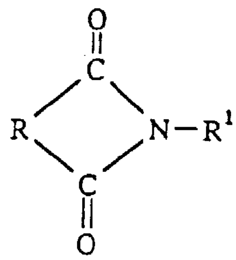

in which :

- R is an aromatic, a linear or branched alkyl, a cycloalkyl, a linear or branched alkenyl, or a cycloalkenyl, a linear or branched alkyne, or a cycloalkynyl, it being possible for said radicals to be optionally substituted,
- $R^1$ represents an aliphatic, an alicyclic or an aromatic.

**2.** The method of preparation according to claim 1, characterised in that the at least one co-monomer is or carries the chromophore of structure D$\pi$A.

**3.** The method according to claim 1 or 2, characterised :

- in that at least one starting co-monomer having at least one cross-linking group GR is used and/or at least one cross-linking group GR is grafted onto at least one of the starting co-monomers in a prior step, or subsequently onto the polymer, said GR groups being localised *in fine :*
    - either within the polymer chains,
    - or laterally (pending GRs) with respect to the polymer chains,
    - or on at least one of the polymer chain ends,
- and in that these GRs are identical or different from each other on the same polymer.

**4.** The method according to any one of claims 1 to 3, characterised in that the polymer obtained is subjected to a post-polymerisation treatment consisting in heating at a temperature greater than or equal to 100°C, preferably 120°C, more preferably still between 180 and 350°C, preferably under vacuum.

**5.** A polyesterimide, as obtained by the method according to any one of claims 1 to 4, for use in linear and/or non-linear optics, of the type which comprises repeating ester functions E = -CO-O-, and repeating imide moieties I of the following formula :

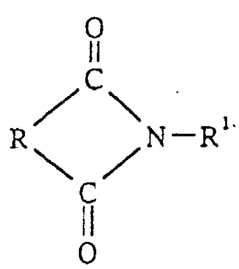

in which :

- R is an aromatic, a linear or branched alkyl, a cycloalkyl, a linear or branched alkenyl, or a cycloalkenyl, a linear or branched alkyne, or a cycloalkynyl, it being possible for said radicals to be optionally substituted,
- $R^1$ represents an aliphatic, an alicyclic or an aromatic,

and at least one chromophore,

characterised in that it is free of amide functions which can be cyclised into imides.

**6.** The polyesterimide according to claim 5, characterised in that it has a repeating unit of the following schematic formula Fg :

$$Fg = \left[ (SU_1)_{X1} \ldots\ldots (SU_i)_{Xi} \ldots\ldots (SU_j)_{Xj} \ldots\ldots (SU_m)_{Xm} \right]_n$$

- $m \geq 1$,
- $\Sigma X_i = 1$ (i = 1 to m),
- $n \geq 1$,
- in which the $Si_i$ (i = 1 to m) are chemical sequences formed by elementary moieties selected from the following groups : I, DπA, E and $R^r$,
- and all the sub-units constituting the repeating unit comprising at least one ester function E, at least one imide function I, at least one chromophore DπA and, optionally, at least one filling radical $R^r$ constituted by a hydrocarbon group, preferably alkyl and/or cycloalkyl and/or aryl and/or alkenyl and/or alkynyl and/or cycloalkenyl and/or cycloalkynyl and/or aromatic.

**7.** The polyesterimide according to claim 6, characterised in that the sub-units $(Si_i)_{Xi}$ (i = 1 to m) can belong to the three following classes of chemical sequences :

- A = E.DπA.E.I,
- B = E.DπA.E.$R^r$,
- C = E.$R^r$.E.I.

**8.** The polyesterimide according to claim 6 or claim 7, characterised in that it is constituted by a homopolymer constituted of a repeating unit in which $SU_1$ belongs to class A, with DπA and I each corresponding to one sole and same chemical variety.

**9.** The polyesterimide according to claim 7, characterised in that it is constituted by a co-polymer the repeating unit of which comprises :

- at least two different sub-units $(Su_i)_{Xi}$ , $(Su_j)_{Xj}$ :
    - of the A (AA') type ,
    - of the AB type,
    - of the AC type ,
    - of the BC type ,
- or at least three different sub-units $(Su_i)_{Xi}$ , $(Su_j)_{Xj}$ , $(Su_k)_{Xk}$ , of the ABC type.

**10.** The polyesterimide according to claim 7 or claim 9, characterised in that the repeating unit contains at least one sub-unit $(Su_i)_{Xi}$ which carries DπA (A or B), and in that $X_i$ is greater than or equal to 0.05, preferably 0.15 and, more preferably still, 0.3.

**11.** The polyesterimide according to any one of claims 5 to 10, characterised in that it has cross-linking groups GR.

**12.** The polyesterimide according to claim 11, characterised in that the GR groups are carried by at least one of the $(Su_i)_{Xi}$ sub-units, and/or by at least one of the polymer chain ends.

**13.** The polyesterimide according to claim 11 or claim 12, characterised in that GR is bound to at least one imide function (I) and/or to at least one chromophore DπA .

**14.** The polyesterimide according to any one of claims 11 to 13, characterised in that at least one part of the cross-linkable groups GR is capable of reacting with at least one cross-linking auxiliary.

**15.** The polyesterimide according to any one of claims 5 to 14, characterised in that its molecular mass is greater than or equal to 1000 D, preferably between 1000 and 200000 D and, more preferably still, between 3000 and 70000 D;

**16.** A polyesterimide for use in linear and/or non-linear optics, of the type comprising at least one chromophore, characterised in that it is obtained by polyesterification of co-monomers one at least of which comprises at least one, preferably one or two, imide moieties, and in that it is free of amide functions which can be cyclised into imides.

**17.** The polyesterimide according to claim 16, characterised in that the at least one co-monomer is or carries the chromophore D$\pi$A.

**18.** A linear and/or non-linear optical device, characterised in that it is prepared, at least in part, with at least one polyesterimide obtained by the method according to any one of claims 1 to 4 and/or with at least one polyesterimide according to any one of claims 5 to 17.